# EUROPEAN PATENT SPECIFICATION

(11) **EP 1 893 793 B1**
(45) Date of publication and mention of the grant of the patent: **29.09.2010**
(21) Application number: 06793277.2
(22) Date of filing: 06.09.2006
(51) Int. Cl.: D01F 6/74

(54) **BUILDING COMPONENT AND METHOD OF REINFORCING A BUILDING STRUCTURE**
BAUELEMENT UND VERFAHREN ZUR VERSTÄRKUNG EINER GEBÄUDESTRUKTUR
COMPOSANT DE CONSTRUCTION ET PROCEDE DE RENFORT D'UNE STRUCTURE DE CONSTRUCTION

(30) Priority: 11.11.2005 IT MI20052156
(43) Date of publication of application: 05.03.2008
(73) Proprietor: Ruredil S.p.A., 20122 Milano (IT)
(72) Inventor: MANTEGAZZA, Giovanni, I-20064 Gorgonzola (IT)
(74) Representative: Pesce, Michele
(86) International application number: PCT/EP2006/066076
(87) International publication number: WO 2007/054388

(56) References cited:
- EP-A1- 1 245 547
- EP-A1- 1 541 726
- DATABASE WPI Week 200424 Derwent Publications Ltd., London, GB; AN 2004-108600 XP002421998 & JP 2004 100098 A (TOYO BOSEKI KK) 2 April 2004 (2004-04-02) -& JP 2004 100098 A (TOYO BOSEKI) 2 April 2004 (2004-04-02) -& JP 2004 143731 A (TOYO BOSEKI) 20 May 2004 (2004-05-20)
- [Online] XP002421336 Retrieved from the Internet: URL:http://www.toyobo.co.jp/e/seihin/kc/pb o/menu/fra_menu_en.htm>

## Description

The present invention relates to a building component and a method of reinforcing a building structure.

After their installation, building structures (constructed of brick, plain concrete, reinforced concrete, etc.) are known to undergo slow but progressive degradation with the passing of time, caused by environmental aggression or by poor execution and/or by unsuitable choice of materials for that particular application.

EP 1541726 discloses a cement/concrete structure which may be reinforced by embedding polybenzazole reinforcing elements into the body of the structure.

Building structures are traditionally reinforced by applying an electrically welded mesh which wraps the structure, in order to increase its ductility.

However, this method presents numerous drawbacks, including installation difficulty caused by the weight and poor manageability of the electrically welded mesh, and the risk of corrosion of the electrically welded mesh, in particular in aggressive environments.

To overcome these drawbacks, a. reinforcement system has been developed based on the use of bands and fabrics of carbon or other fibres, which are applied using thermoplastic resin, usually epoxy resin, to ensure adhesion between the building structure and the carbon bands.

However this system has also displayed certain drawbacks, including the insufficient temperature which it is able to withstand; in this respect the temperature is limited to about 80°C by the presence of the epoxy resins, hence in the case of fire the epoxy resin degrades rapidly and causes the carbon reinforcement bands to separate very quickly from the structure.

Further drawbacks of the use of reinforcement systems with carbon fibres derive from the noxiousness for the operator and the environment by using epoxy resins, the (very high) cost both of the epoxy resins and of the carbon bands, and finally the fact that the epoxy resins create a barrier which prevents thermohygrometric transfer between the building structure and the outside; hence in practice the moisture remains trapped within the building structure and cannot migrate naturally towards the outside.

A further reinforcement system is described in German patent DE A 19525508 which teaches to reinforce a building structure by applying to it a mineral matrix in the form of a layer of cement mortar, then pressing a textile reinforcement mesh thereon to embed it in the cement mortar, and finally applying a second cement mortar layer of the same type as the first layer.

However this reinforcement system presents the considerable drawback of using cement mortar formed from a mixture of cement, fillers and a styrene/acrylate dispersion in water, this latter (the styrene/acrylate dispersion in water) particularly giving the cement mortar a high fluidity which causes it to flow when applied to vertical walls; moreover, the presence of styrene/acrylate causes degradation with the formation of fissures in the dry cement mortar.

To also overcome these drawbacks, EP 1245547 describes a reinforcement system consisting of applying a particular cement mortar to the component to be treated, embedding in this cement mortar layer a mesh of carbon fibres, glass fibres, aramid fibres, polyester, polyethylene or the like, and finally applying a second cement mortar layer onto the first.

In particular, the cement mortar described in said patent enables thermohygrometric transfer between the building component and the outer environment, and presents the same fire resistance as the building structure.

It has been unexpectedly observed that cement mortar of the type indicated in EP 1245547, together with a reinforcement structure formed of poly[benz(1,2-D:5,4-D')bisoxazole-2,6-diyl-1,4-phenylen] fibre enables mechanical results (in terms of reinforcement) to be obtained (in addition to the advantages indicated in EP 1245547) which are surprisingly better than the other types of reinforcement.

Specifically, said reinforcement structure is formed from a fabric (in which the weft and warp fibres are woven together) or from a mesh (in which the weft and warp fibres are mutually superposed but not woven).

The technical aim of the present invention is therefore to provide a building component and a method of reinforcing a building structure which ensure thermohygrometric transfer between the building structure and the outside, in which the building component presents resistance to fire and to aggressive chemical environments, while at the same time presenting very high mechanical properties (in terms of reinforcement).

The technical aim, together with these and other objects, are attained according to the present invention by a building component and a method of reinforcing a building structure in accordance with the accompanying claims.

Further characteristics and advantages of the invention will be more apparent from the description of a preferred but non-exclusive embodiment of the component and method of the invention given with reference to the accompanying figures, which are provided by way of nonlimiting example and in which:
Figure 1 is a table indicating the mechanical characteristics of poly[benz(1,2-D:5,4-D')bisoxazole-2,6-diyl-1,4-phenylen] fibres (CAS No. 60857-81-0, marketed under the name "zylon");
Figure 2 is a table comparing the mechanical characteristics of poly[benz(1,2-D:5,4-D')bisoxazole-2,6-diyl-1,4-phenylen] fibres (CAS No. 60857-81-0, marketed under the name "zylon") with other synthetic fibres;
Figure 3 is a table indicating the physical nature of the synthetic meshes used in carrying out the flexure tests;
Figure 4 is a table indicating the concrete mix used to make the test pieces utilized in the flexure tests;
Figure 5 shows the scheme for reinforcing the concrete test pieces against flexure and for reinforcing them against deformation;
Figure 6 is a graph showing the load-deflection diagram for test pieces with polypropylene fibre mesh reinforcement;
Figure 7 is a graph showing the load-deflection diagram for test pieces with aramid fibre mesh reinforcement;
Figure 8 is a graph showing the load-deflection diagram for test pieces with glass fibre mesh reinforcement;
Figure 9 is a graph showing the load-deflection diagram for test pieces with carbon fibre mesh reinforcement;
Figure 10 is a graph showing the load-deflection diagram for test pieces with carbon fibre/aramid fibre mesh reinforcement;
Figure 11 is a graph showing the load-deflection diagram for test pieces with carbon fibre/polyester fibre mesh reinforcement;
Figure 12 is a graph showing the load-deflection diagram for test pieces with reinforcement formed from a mesh of poly[benz(1,2-D:5,4-D')bisoxazole-2,6-diyl-1,4-phenylen] fibres (CAS No. 60857-81-0, marketed under the name "zylon"); and

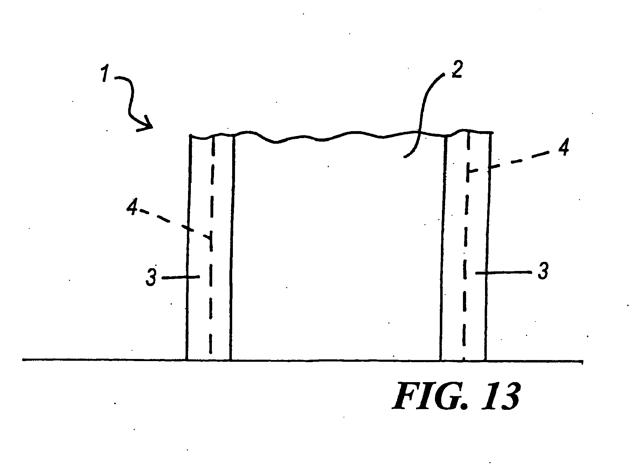

Figure 13 is a schematic section through a building component of the invention.

With reference to said figures, a building component is shown, indicated overall by the reference numeral 1.

The building component 1 comprises a central structure 2 consisting of the structural element to be reinforced, which may for example be brickwork, plain concrete or reinforced concrete articles.

The central structure 2 is covered with a layer of cement mortar 3; this cement mortar is described specifically in EP 1245547 and comprises between 5% and 95% of cement, between 10% and 70% of fine inert mineral fillers having a particle size less than 700 micron, chemical additives comprising between 0.1% and 25% of unsaturated copolymer resins, between 0.05% and 2.5% of fluidifying additives and between 0.005% and 1% of thixotropic additives pertaining to the cellulose class, all the specified percentages being by weight and referred to the total weight of the cement mortar.

The unsaturated copolymer resins are preferably of acrylic type; the unsaturated copolymer resins and/or the fluidifying additives and/or the thixotropic additives are added to the mortar mix as a liquid mixture or in powder form.

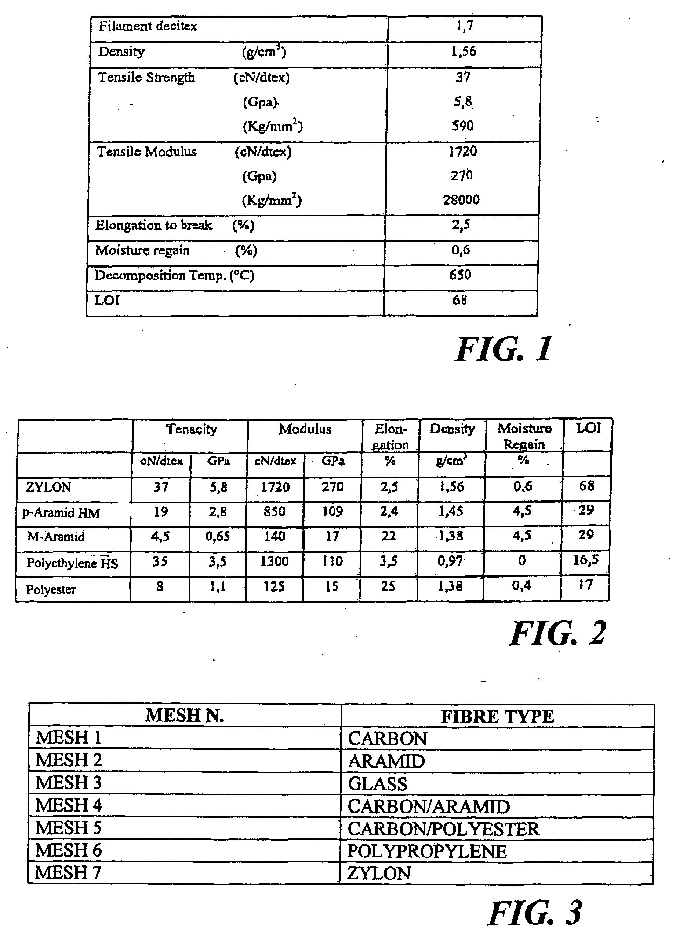

A reinforcement structure 4 in the form of poly[benz(1,2-D:5,4-D')bisoxazole-2,6-diyl-1,4-phenylen] fibre (CAS No. 60857-81-0) is embedded in the interior of the cement mortar layer 3, the reinforcement structure 4 being formed in particular from the poly[benz(1,2-D:5,4-D')bisoxazole-2,6-diyl-1,4-phenylen] fibre produced by the Toyobo Company under the commercial name of "zylon"; the mechanical characteristics of this fibre are indicated in Figure 1.

Preferably the reinforcement structure is a textile structure or a mesh structure, the characteristics of which are preferably those indicated in EP 1245547.

The fluidifying additives for the cement mortar (these also being specifically described in EP 1245547) are chosen from the group consisting of polymers based on polycondensed lignin, betanaphthalene or melamine-formaldehyde sulphonates, and those based on modified polyacrylate chains.

Mechanical deformation load tests were carried out on concrete test pieces of dimensions 600x150x75 millimetres reinforced against flexure by the reinforcement system indicated in EP 1245547; synthetic meshes of different types were used, among which the zylon fibre, the chemical mesh nature and the mechanical characteristics of the fibres used for the tests are indicated in Figures 3 and 2 respectively.

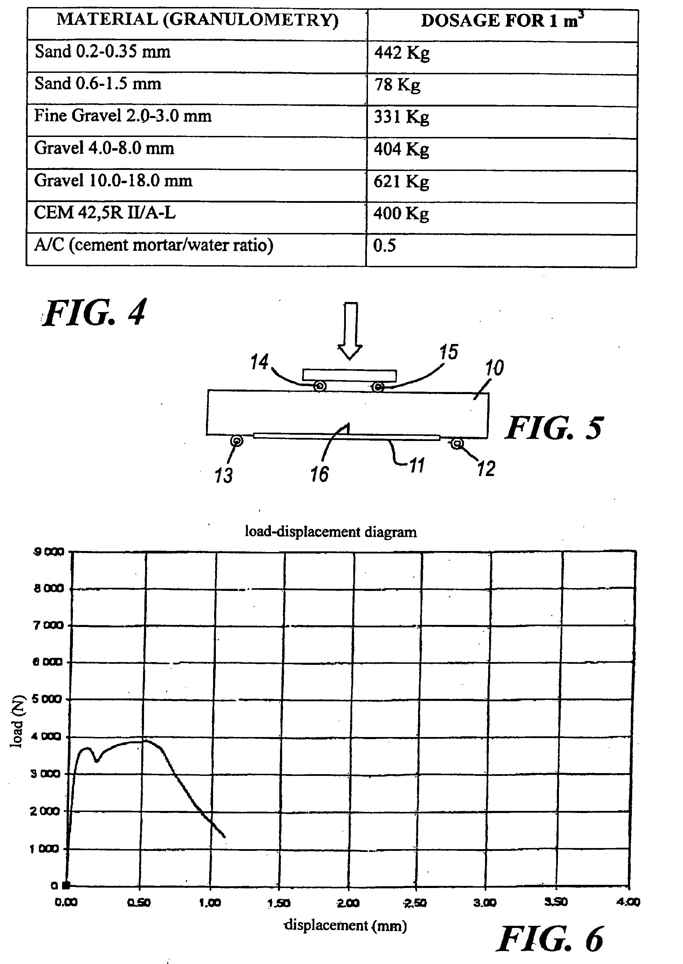

The mix design of the concrete used for forming the test pieces was the same for all test pieces, and consisted of the mix indicated in the table of Figure 4.

With reference to Figure 5, the concrete test pieces were reinforced with a reinforcement structure 11 and were subjected to a flexure test at four points 12, 13, 14, 15, the load and deflection being measured at the centre line.

The test was conducted with controlled displacement at a test velocity of 0.01 millimetres/minute and with a load cell of 50 kN maximum capacity.

The test pieces were notched on their centre line (at 16) at the intrados, with a notch of 1 centimetre depth.

For each type of synthetic mesh, 25 test pieces reinforced as indicated in Figure 5 were prepared, each test piece being subjected to a flexure test at four points with the load and deflection being measured at the centre line.

The test results are shown in Figures 6-12.

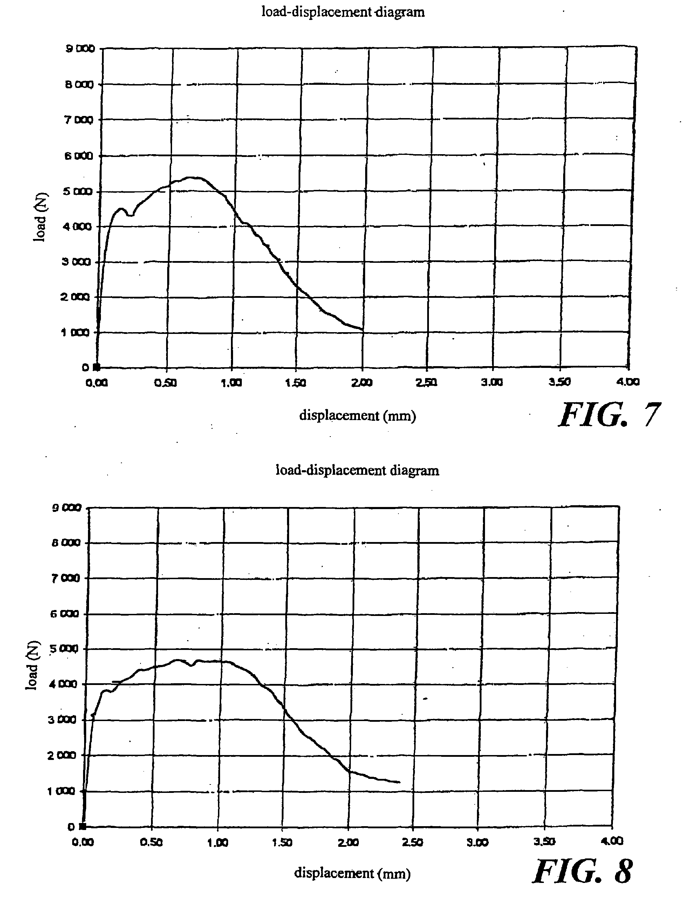

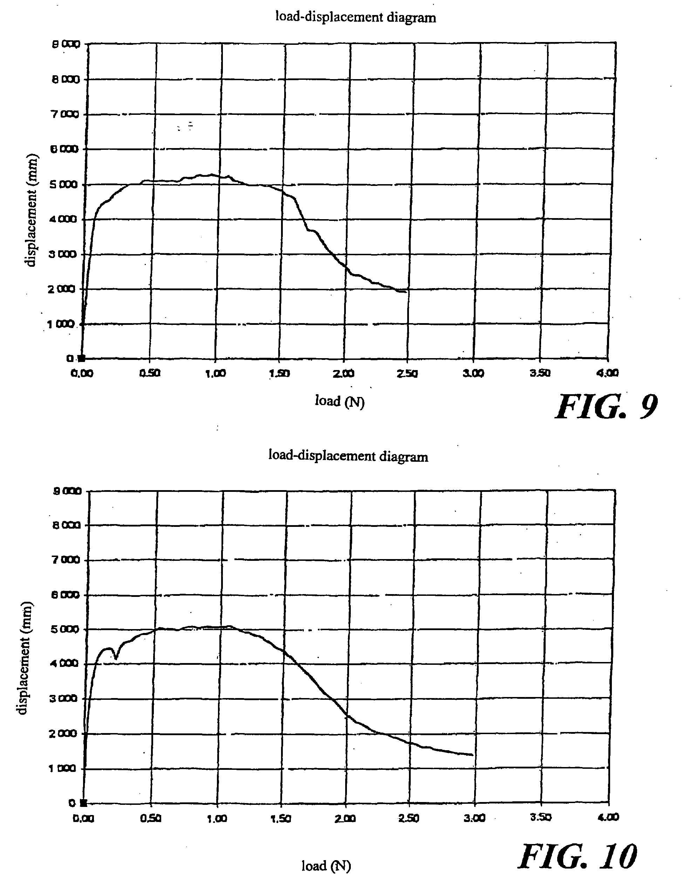

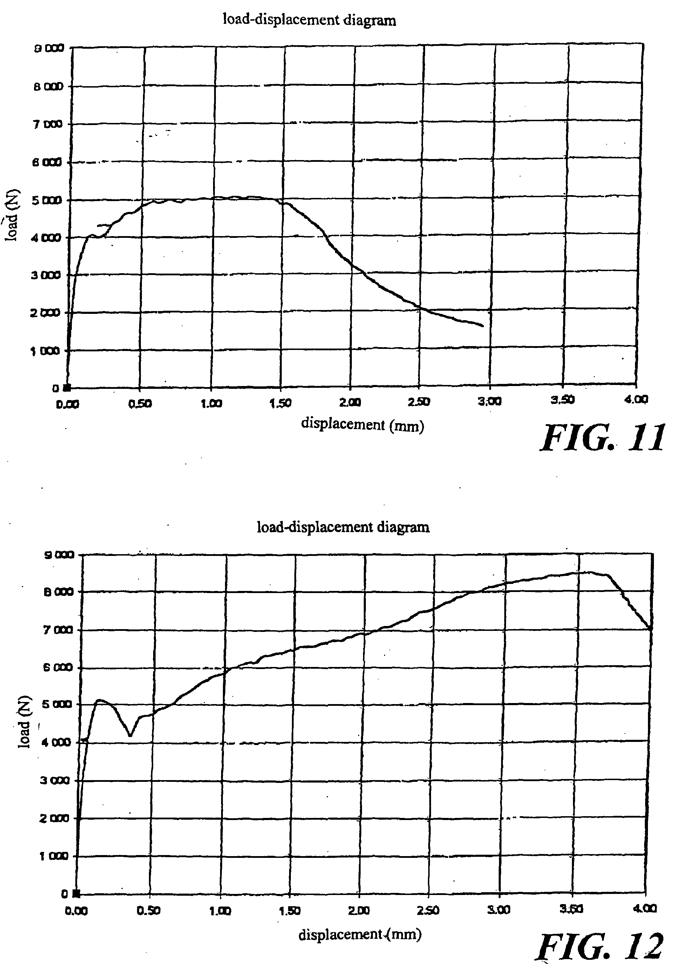

Specifically:
- the concrete test pieces reinforced against flexure with polypropylene fibre mesh (Figure 6) showed that the polypropylene fibre had almost no capacity to ensure an increase in maximum load, and consequently were unable to form an effective structural reinforcement;
- the concrete test pieces reinforced against flexure with aramid fibre mesh (Figure 7) or with glass fibre mesh (Figure 8) showed a slight increase in maximum load, however the fibre, by unthreading from the matrix, rapidly loses its effectiveness, as shown by the descending branch of the curve;
- the concrete test pieces reinforce against flexure with carbon fibre mesh (Figure 9) or with a mixed carbon and aramid fibre mesh (Figure 10) or with a mixed carbon and polyester fibre mesh (Figure 11) proved to be the most effective compared with the previously tested reinforcements. In this respect, the pattern of the load/displacement curve shows an increase in maximum load and ductile behaviour of crisis type (slow descent of the second branch of the curve).
- the concrete test pieces reinforced against flexure with zylon fibre mesh (Figure 12) present (as shown in the figure) a load which increases to a value double that of carbon reinforcement, to considerably increase the reinforcement ductility, as can be deduced by the area subtended by the corresponding curve.

The present invention also relates to a method of reinforcing a building structure.

The method consists of forming on the building structure to be reinforced a layer of covering cement mortar of the aforestated type, and embedding in the cement mortar layer a reinforcement structure formed of poly[benz(1,2-D:5,4-D')bisoxazole-2,6-diyl-1,4-phenylen] fibre (of CAS No. 60857-81-0).

The reinforcement structure is suitably a mesh structure.

It has been found in practice that the building component and the method of reinforcing a building structure of the invention are particularly advantageous as they enable reinforcements for damaged structures to be formed having superior mechanical characteristics while at the same time enabling thermohygrometric transfer between the structure and the outside and ensuring resistance even under extreme conditions such as the presence of fire or aggressive environments.

In practice the materials used and the dimensions can be chosen at will according to requirements and to the state of the art.

## Claims

1. A building component comprising a central structure covered by a layer of cement mortar comprising between 5% and 95% of cement, between 10% and 70% of fine inert mineral fillers having a particle size less than 700 micron, chemical additives comprising between 0.1% and 25% of unsaturated copolymer resins, between 0.05% and 2.5% of fluidifying additives and between 0.005% and 1% of thixotropic additives pertaining to the cellulose class, all the specified percentages being by weight and referred to the total weight of the cement mortar, a reinforcement structure being embedded in the cement mortar layer, **characterised in that** said reinforcement structure is formed of poly[benz(1,2-D:5,4-D')bisoxazole-2,6-diyl-1,4-phenylen] fibre.

2. A building component as claimed in claim 1, **characterised in that** said unsaturated copolymer resins and/or said fluidifying additives and/or said thixotropic additives are added to the mortar mix as a liquid mixture or in powder form.

3. A building component as claimed in claim 1 or 2, **characterised in that** said poly[benz(1,2-D:5,4-D')bisoxazole-2,6-diyl-1,4-phenylen] fibre has the CAS No. 60857-81-0.

4. A building component as claimed in one of the preceding claims, **characterised in that** said reinforcement structure is a textile structure.

5. A building component as claimed in one of the preceding claims, **characterised in that** said reinforcement structure is a mesh.

6. A building component as claimed in one of the preceding claims, **characterised in that** said fluidifying additives are chosen from the group consisting of polymers based on polycondensed lignin, betanaphthalene or melamine-formaldehyde sulphonates, and those based on modified polyacrylate chains.

7. A method of reinforcing a building structure, consisting of forming on the building structure to be reinforced a layer of covering cement mortar comprising between 5% and 95% of cement, between 10% and 70% of fine inert mineral fillers having a particle size less than 700 micron, chemical additives comprising between 0.1% and 25% of unsaturated copolymer resins, between 0.05% and 2.5% of fluidifying additives and between 0.005% and 1% of thixotropic additives pertaining to the cellulose class, all the specified percentages being by weight and referred to the total weight of the cement mortar, and embedding a reinforcement structure in the cement mortar layer, **characterised in that** the reinforcement structure is formed of poly[benz(1,2-D:5,4-D')bisoxazole-2,6-diyl-1,4-phenylen] fibre.

8. A method as claimed in the preceding claim, **characterised in that** said unsaturated copolymer resins and/or said fluidifying additives and/or said thixotropic additives are added to the mortar mix as a liquid mixture or in powder form.

9. A method as claimed in claim 7 or 8, **characterised in that** said poly[benz(1,2-D:5,4-D')bisoxazole-2,6-diyl-1,4-phenylen] fibre has the CAS No. 60857-81-0.

10. A method as claimed in one of claims 7 and onwards, **characterised in that** said reinforcement structure is a textile structure.

11. A method as claimed in one of claims 7 and onwards, **characterised in that** said reinforcement structure is a mesh.

12. A method as claimed in one of claims 7 and onwards, **characterised in that** said fluidifying additives are chosen from the group consisting of polymers based on polycondensed lignin, betanaphthalene or melamine-formaldehyde sulphonates, and those based on modified polyacrylate chains.

13. Use of a poly[benz(1,2-D:5,4-D')bisoxazole-2,6-diyl-1,4-phenylen] fibre for reinforcing a structure formed by means of a cement mortar comprising between 5% and 95% of cement, between 10% and 70% of fine inert mineral fillers having a particle size less than 700 micron, chemical additives comprising between 0.1% and 25% of unsaturated copolymer resins, between 0.05% and 2.5% of fluidifying additives and between 0.005% and 1% of thixotropic additives pertaining to the cellulose class, all the specified percentages being by weight and referred to the total weight of the cement mortar.

14. Use of a fibre as claimed in the preceding claim, **characterised in that** said unsaturated copolymer resins and/or said fluidifying additives and/or said thixotropic additives are added to the mortar mix as a liquid mixture or in powder form.

15. Use of a fibre as claimed in claim 13 or 14, **characterised in that** said poly[benz(1,2-D:5,4-D')bisoxazole-2,6-diyl-1,4-phenylen] fibre has the CAS No. 60857-81-0.

## Patentansprüche

1. Bauwerkkomponente, die eine zentrale Struktur enthält, die durch eine Schicht von Zementmörtel bedeckt ist, der zwischen 5% und 95% Zement, zwischen 10% und 70% feiner inerter mineralischer Füllstoffe mit einer Teilchengröße von weniger als 700 Mikrometern, chemische Additive, die zwischen 0,1% und 25% ungesättigter Copolymerharze enthalten, zwischen 0,05% und 2,5% verflüssigender Additive und zwischen 0,005% und 1% thixotroper Additive, die zur Celluloseklasse gehören, enthält, wobei sämtliche der angegebenen prozentualen Anteile nach Gewicht und bezogen auf das Gesamtgewicht des Zementmörtels sind, wobei eine Verstärkungsstruktur in die Zementmörtelschicht eingebettet ist, **dadurch gekennzeichnet, dass** die Verstärkungsstruktur aus Poly[benz(1,2-D:5,4-D')bisoxazol-2,6-diyl-1,4-phenylen]faser gebildet ist.

2. Bauwerkkomponente nach Anspruch 1, **dadurch gekennzeichnet, dass** die ungesättigten Copolymerharze und/oder die verflüssigenden Additive und/oder die thixotropen Additive als flüssiges Gemisch oder in Pulverform zu der Mörtelmischung gegeben sind.

3. Bauwerkkomponente nach Anspruch 1 oder 2, **dadurch gekennzeichnet, dass** die Poly[benz(1,2-D:5,4-D')bisoxazol-2,6-diyl-1,4-phenylen]faser die CAS-Nr. 60857-81-0 aufweist.

4. Bauwerkkomponente nach einem der vorhergehenden Ansprüche, **dadurch gekennzeichnet, dass** die Verstärkungsstruktur eine Gewebestruktur ist.

5. Bauwerkkomponente nach einem der vorhergehenden Ansprüche, **dadurch gekennzeichnet, dass** die Verstärkungsstruktur eine Masche ist.

6. Bauwerkkomponente nach einem der vorhergehenden Ansprüche, **dadurch gekennzeichnet, dass** die verflüssigenden Additive ausgewählt sind aus der Gruppe bestehend aus Polymeren, die auf polykondensiertem Lignin, Beta-Naphthalin oder Melaminformaldehydsulfonaten basieren, und solchen, die auf modifizierten Polyacrylatketten basieren.

7. Verfahren zum Verstärken einer Bauwerkstruktur, bei dem auf der zu verstärkenden Bauwerkstruktur eine Schicht von bedeckendem Zementmörtel gebildet wird, der zwischen 5% und 95% Zement, zwischen 10% und 70% feiner inerter mineralischer Füllstoffe mit einer Teilchengröße von weniger als 700 Mikrometern, chemische Additive, die zwischen 0,1% und 25% ungesättigter Copolymerharze enthalten, zwischen 0,05% und 2,5% verflüssigender Additive und zwischen 0,005% und 1% thixotroper Additive, die zur Celluloseklasse gehören, enthält, wobei sämtliche der angegebenen prozentualen Anteile nach Gewicht und bezogen auf das Gesamtgewicht des Zementmörtels sind, und eine Verstärkungsstruktur in die Zementmörtelschicht eingebettet wird, **dadurch gekennzeichnet, dass** die Verstärkungsstruktur aus Poly[benz(1,2-D:5,4-D')bisoxazol-2,6-diyl-1,4-phenylen]faser gebildet ist.

8. Verfahren nach dem vorhergehenden Anspruch, **dadurch gekennzeichnet, dass** die ungesättigten Copolymerharze und/oder die verflüssigenden Additive und/oder die thixotropen Additive als flüssiges Gemisch oder in Pulverform zu der Mörtelmischung gegeben werden.

9. Verfahren nach Anspruch 7 oder 8, **dadurch gekennzeichnet, dass** die Poly[benz(1,2-D:5,4-D')bisoxazol-2,6-diyl-1,4-phenylen] faser die CAS-Nr. 60857-81-0 aufweist.

10. Verfahren nach einem der Ansprüche 7 und folgende, **dadurch gekennzeichnet, dass** die Verstärkungsstruktur eine Gewebestruktur ist.

11. Verfahren nach einem der Ansprüche 7 und folgende, **dadurch gekennzeichnet, dass** die Verstärkungsstruktur eine Masche ist.

12. Verfahren nach einem der Ansprüche 7 und folgende, **dadurch gekennzeichnet, dass** die verflüssigenden Additive ausgewählt sind aus der Gruppe bestehend aus Polymeren, die auf polykondensiertem Lignin, Beta-Naphthalin oder Melaminformaldehydsulfonaten basieren, und solchen, die auf modifizierten Polyacrylatketten basieren.

13. Verwendung einer Poly[benz(1,2-D:5,4-D')bisoxazol-2,6-di-yl-1,4-phenylen]faser zum Verstärken einer Struktur, die mittels Zementmörtel gebildet ist, der zwischen 5% und 95% Zement, zwischen 10% und 70% feiner inerter mineralischer Füllstoffe mit einer Teilchengröße von weniger als 700 Mikrometern, chemische Additive, die zwischen 0,1% und 25% ungesättigter Copolymerharze enthalten, zwischen 0,05% und 2,5% verflüssigender Additive und zwischen 0,005% und 1% thixotroper Additive, die zur Celluloseklasse gehören, enthält, wobei sämtliche der angegebenen prozentualen Anteile nach Gewicht und bezogen auf das Gesamtgewicht des Zementmörtels sind.

14. Verwendung einer Faser nach dem vorhergehenden Anspruch, **dadurch gekennzeichnet, dass** die ungesättigten Copolymerharze und/oder die verflüssigenden Additive und/oder die thixotropen Additive als flüssiges Gemisch oder in Pulverform zu der Mörtelmischung gegeben sind.

15. Verwendung einer Faser nach Anspruch 13 oder 14, **dadurch gekennzeichnet, dass** die Poly[benz(1,2-D:5,4-D')bisoxazol-2,6-diyl-1,4-phenylen]faser die CAS-Nr. 60857-81-0 aufweist.

## Revendications

1. Composant de construction comprenant une structure centrale recouverte d'une couche de mortier de ciment comprenant de 5% à 95% de ciment, de 10% à 70% de charges minérales inertes fines de granulométrie inférieure à 700 microns, ainsi que des additifs chimiques comprenant de 0,1% à 25% de résines de copolymères insaturés, de 0,05% à 2,5% d'additifs fluidifiants et de 0,005% à 1% d'additifs thixotropes appartenant à la classe de la cellulose, les pourcentages spécifiés étant tous exprimés en poids et rapportés au poids total du mortier de ciment, une structure de renfort étant noyée dans la couche de mortier de ciment, **caractérisé en ce que** ladite structure de renfort est constituée de fibre de poly[benz(1,2-D:5,4-D')bisoxazole-2,6-diyl-1,4-phénylène].

2. Composant de construction selon la revendication 1, **caractérisé en ce que** lesdites résines de copolymères insaturés et/ou lesdits additifs fluidifiants et/ou lesdits additifs thixotropes sont ajoutés au coulis de mortier sous la forme d'un mélange liquide ou sous forme de poudre.

3. Composant de construction selon la revendication 1 ou la revendication 2, **caractérisé en ce que** ladite fibre de poly[benz(1,2-D:5,4-D')bisoxazole-2,6-diyl-1,4-phénylène] porte le numéro CAS 60857-81-0.

4. Composant de construction selon l'une quelconque des revendications précédentes, **caractérisé en ce que** ladite structure de renfort est une structure textile.

5. Composant de construction selon l'une quelconque des revendications précédentes, **caractérisé en ce que** ladite structure de renfort est un treillis.

6. Composant de construction selon l'une quelconque des revendications précédentes, **caractérisé en ce que** lesdits additifs fluidifiants sont choisis dans le groupe constitué par des polymères à base de sulfonates de lignine, bêta-naphtalène ou mélamine- formaldéhyde polycondensés, et ceux à base de chaînes de polyacrylates modifiés.

7. Procédé de renforcement d'une structure de construction, consistant à former sur la structure de construction à renforcer une couche de mortier de ciment de couverture comprenant de 5% à 95% de ciment, de 10% à 70% de charges minérales inertes fines de granulométrie inférieure à 700 microns, ainsi que des additifs chimiques comprenant de 0,1% à 25% de résines de copolymères insaturés, de 0,05% à 2,5% d'additifs fluidifiants et de 0,005% à 1% d'additifs thixotropes appartenant à la classe de la cellulose, les pourcentages spécifiés étant tous exprimés en poids et rapportés au poids total du mortier de ciment, et à noyer une structure de renfort dans la couche de mortier de ciment, **caractérisé en ce que** la structure de renfort est constituée de fibre de poly[benz(1,2-D:5,4-D')bisoxazole-2,6-diyl-1,4-phénylène].

8. Procédé selon la revendication précédente, **caractérisé en ce que** lesdites résines de copolymères insaturés et/ou lesdits additifs fluidifiants et/ou lesdits additifs thixotropes sont ajoutés au coulis de mortier sous la forme d'un mélange liquide ou sous forme de poudre.

9. Procédé selon la revendication 7 ou la revendication 8, **caractérisé en ce que** ladite fibre de poly[benz(1,2-D:5,4-D')bisoxazole-2,6-diyl-1,4-phénylène] porte le numéro CAS 60857-81-0.

10. Procédé selon l'une quelconque des revendications 7 et suivantes, **caractérisé en ce que** ladite structure de renfort est une structure textile.

11. Procédé selon l'une quelconque des revendications 7 et suivantes, **caractérisé en ce que** ladite structure de renfort est un treillis.

12. Procédé selon l'une quelconque des revendications 7 et suivantes, **caractérisé en ce que** lesdits additifs fluidifiants sont choisis dans le groupe constitué par des polymères à base de sulfonates de lignine, bêta-naphtalène ou mélamine-formaldéhyde polycondensés, et ceux à base de chaînes de polyacrylates modifiés.

13. Utilisation d'une fibre de poly[benz(1,2-D:5,4-D')bisoxazole-2,6-diyl-1,4-phénylène] pour renforcer une structure constituée d'un mortier de ciment comprenant de 5% à 95% de ciment, de 10% à 70% de charges minérales inertes fines de granulométrie inférieure à 700 microns, ainsi que d'additifs chimiques comprenant de 0,1% à 25% de résines de copolymères insaturés, de 0,05% à 2,5% d'additifs fluidifiants et de 0,005% à 1% d'additifs thixotropes appartenant à la classe de la cellulose, les pourcentages spécifiés étant tous exprimés en poids et rapportés au poids total du mortier de ciment.

14. Utilisation d'une fibre selon la revendication précédente, **caractérisée en ce que** lesdites résines de copolymères insaturés et/ou lesdits additifs fluidifiants et/ou lesdits additifs thixotropes sont ajoutés au coulis de mortier sous la forme d'un mélange liquide ou sous forme de poudre.

15. Utilisation d'une fibre selon la revendication 13 ou la revendication 14, **caractérisée en ce que** ladite fibre de poly[benz(1,2-D:5,4-D')bisoxazole-2,6-diyl-1,4-phénylène] porte le numéro CAS 60857-81-0.
